# EUROPÄISCHE PATENTSCHRIFT

(11) **EP 3 018 412 B1**
(45) Veröffentlichungstag und Bekanntmachung des Hinweises auf die Patenterteilung: **16.10.2019**
(21) Anmeldenummer: 15159026.2
(22) Anmeldetag: 13.03.2015
(51) Int. Cl.: F23L 15/04, F28F 1/42

(54) **Rekuperator und Rekuperatorbrenner**
Recuperator and Recuperative Burner
Récupérateur et Brûleur à Récupération

(30) Priorität: 05.11.2014 DE 102014116126
(43) Veröffentlichungstag der Anmeldung: 11.05.2016
(73) Patentinhaber: NOXMAT GmbH, 09569 Oederan (DE)
(72) Erfinder: Rakette, Roland, 09599 Freiberg (DE); Grämer, Tobias, 09599 Freiberg (DE); Wolf, Matthias, 09599 Freiberg (DE)
(74) Vertreter: Witte, Weller & Partner Patentanwälte mbB

(56) Entgegenhaltungen:
- WO-A1-2007/024229
- WO-A1-2014/085181
- DE-A1- 2 742 070
- JP-A- 2001 183 076

## Beschreibung

Die Erfindung betrifft einen Rekuperatorbrenner mit einem Brennerkopf, an dem ein Brennrohr und ein Abgasleitrohr gehalten sind, wobei zwischen dem Brennrohr und dem Abgasleitrohr ein Rekuperator gehalten ist.

Die Erfindung betrifft ferner einen Rekuperator für einen derartigen Rekuperatorbrenner.

Im Stand der Technik sind Rekuperatorbrenner seit langem bekannt. Rekuperatorbrenner weisen zur Erhöhung des Wirkungsgrades einen Rekuperator auf, an dem auf der einen Seite Abgas entlanggeführt wird und auf der anderen Seite Verbrennungsluft im Gegenstromprinzip geführt wird, um so eine Vorwärmung der Verbrennungsluft zu erreichen. Rekuperatorbrenner mit einem keramischen Rekuperator sind etwa aus der EP 1 486 728 A2 bekannt. Hierbei weist der Rekuperator einen als Wärmeaustauschfläche mit strömenden Fluiden dienenden Rohrabschnitt auf, an dem eine Mehrzahl von spiralförmig zur Längsachse des Rekuperators verlaufende wellenförmig ausgebildete Falten vorgesehen sind.

Einen noch höheren Wirkungsgrad weist ein Rekuperatorbrenner mit abgeflachten Wärmetauscherrohren gemäß der EP 1 995 516 A1 auf. Der metallische Rekuperator zur Vorwärmung von Verbrennungsluft mittels Abgaswärme im Gegenstrom enthält Wärmetauscherrohre, die in einem dem Wärmetausch dienenden Abschnitt einen abgeflachten Spaltquerschnitt aufweisen und an ihrem anderen Ende einen von dem Spaltquerschnitt abweichenden Düsenquerschnitt aufweisen, wobei die Wärmetauscherrohre um eine Mittelachse herum angeordnet sind und die Enden zur Mittelachse hin geneigt sind.

Die hohe Zahl der eingebauten Wärmetauscherrohre von bspw. 72 Stück führt zu einem gegenüber den klassischen Rippenrohrrekuperatoren vergleichsweise komplizierten und aufwändigen Aufbau.

Aus der JP 2001 183076 A ist ein Wärmetauscher für das Abgas einer Gasmaschine, wie einer Gasturbine, bekannt, der im Temperaturbereich von bis zu 750 °C arbeitet. Der Wärmetauscher weist einen hohlzylindrischen Kanal auf der, durch abwechselnden Erhebungen und Vertiefungen in einen faltenbalgartigen Kanal aufgeteilt ist. In den Zwischenräumen sind poröse metallische Einsätze mit hoher Wärmeleitfähigkeit aus einer Nickellegierung aufgenommen. Hierdurch soll die Wärmeübertragung verbessert werden.

Ein solcher Wärmetauscher ist zwar für einen Einsatz bei einer Gasmaschine geeignet, ist jedoch nicht als Rekuperator für einen Rekuperatorbrenner nutzbar, da es sich bei einem Rekuperator um ein spezielles Bauteil für einen Rekuperatorbrenner handelt, das für den Hochtemperatureinsatz bei Rekuperatorbrennern vorgesehen ist. Der Rekuperator muss hierbei besondere Anforderungen an die thermische Beständigkeit (mindestens etwa 1000 °C) und die Gasdurchlässigkeit in Strömungsrichtung und an die Geräuschentwicklung erfüllen, da der Schalldruckpegel nicht oberhalb von 70 bis 80 dB (A) liegen darf.

Aus der DE 103 46 423 B4 ist es ferner bekannt, einen modularen Wärmetauscher, bestehend aus einem oder mehreren Wärmeverteilern, die von einer offenporigen Schaumstruktur umgeben und mit dieser stoffschlüssig verbunden sind herzustellen, wobei in die Schaumstruktur nicht poröse, wärmeleitende Elemente eingelagert sind, und wobei die wärmeleitenden Elemente als Leitflächen oder Leitstäbe ausgebildet sind, die mit der Schaumstruktur oder den Wärmeverteilern stoffschlüssig verbunden sind.

Ein solcher Wärmetauscher ist gleichermaßen aus den oben dargelegten Gründen nicht als Rekuperator für einen Rekuperatorbrenner nutzbar, da es sich bei einem Rekuperator um ein spezielles Bauteil für einen Rekuperatorbrenner handelt, das für den Hochtemperatureinsatz bei Rekuperatorbrennern vorgesehen ist.

Aus der WO 2014/085181 A1 ist ferner ein Wärmetauscher bekannt, der Rippen aus Kupfer aufweist, zwischen denen Zwischenräume gebildet sind, die mit einem Metallschaum aus Aluminium oder Kupfer gefüllt sind, um die Wäremübertragung zu verbessern. Ein solcher Wärmetauscher ist für Maschinen oder Turbinen oder auch für kältetechnische Anwendungen vorgesehen.

Auch ein solcher Wärmetauscher weist die oben beschriebenen Nachteile auf und ist nicht für einen Einsatz als Rekuperator geeignet.

Aus der DE 27 42 070 A1 ist ferner ein Längsrippen-Rekuperator mit einem geringen lichten Rippenabstand bekannt, der auf der Verbrennungsluftseite kleiner als ca. 5 mm ist und der auf der Abgasseite kleiner als ca. 8 mm ist. Der Strömungswiderstand soll sich hierbei in Abhängigkeit von Betriebsbedingungen selbsttätig anpassen.

Auch ein solcher Rekuperator weist einen vergleichsweise niedrigen Wirkungsgrad auf.

Vor diesem Hintergrund liegt der Erfindung die Aufgabe zugrunde, einen Rekuperatorbrenner mit einem Rekuperator in einfacher und robuster Bauweise zu schaffen, der einen möglichst hohen Wirkungsgrad aufweist. Ferner soll möglichst ein reduzierter Schallpegel erzielbar sein.

Ferner soll ein für einen derartigen Rekuperatorbrenner geeigneter Rekuperator angegeben werden.

Hinsichtlich des Rekuperators wird diese Aufgabe durch einen Rekuperator für einen Rekuperatorbrenner gemäß Anspruch 1 gelöst.

Die Aufgabe der Erfindung wird auf diese Weise vollkommen gelöst.

Durch die Einsätze aus einem zellularen Metall wird die Wärmeübertragung am Rekuperator und damit der Wirkungsgrad deutlich verbessert. Gleichzeitig ergibt sich eine reduzierte Schallentwicklung, da das zellulare Metall wie ein Schalldämpfer für durchströmende Gase wirkt. Durch den Einsatz eines solchen Rekuperators ergibt sich ein äußerst leiser Betrieb des Rekuperatorbrenners, ohne dass hierzu zusätzliche Maßnahmen getroffen werden müssen.

Durch die erfindungsgemäß vorgesehene Legierung, die Aluminium als Legierungselement enthält, können die hohen thermischen Anforderungen, die infolge der Durchströmung des Rekuperators mit Abgasen bestehen, erfüllt werden. Die erfindungsgemäß vorgesehene Legierung in Form einer FeCrAl- oder CrNi-Al-Legierung, bildet auf der Oberfläche Al₂O₃, was zu einer hohen Korrosionsbeständigkeit führt.

Da in den Vertiefungen auf der Innenseite oder auf der Außenseite, vorzugsweise auf beiden Seiten, Einsätze aus zellularen Metallen gehalten sind, wird die Wechselwirkung zwischen dem Gasstrom und dem Rekuperator intensiviert, so dass sich eine verbesserte Wärmeübertragung und damit eine Erhöhung des Wirkungsgrades ergibt.

Unter einem zellularen Metall versteht man in diesem Zusammenhang einen metallischen Werkstoff, der nicht kompakt ist, sondern zellular ausgebildet ist, d.h. mit gewissen Zellen oder Poren, so dass eine zusammenhängende, offenporige Hohlstruktur entsteht. Es kann sich hierbei um einen Metallschaum, etwa einen offenporigen Metallschaum handeln. Jedoch sind auch andere Zellstrukturen denkbar, die bspw. nicht wie bei einem Schaum zufällig orientiert sind, sondern regelmäßig orientiert sein können oder ggf. auch eine bestimmte Texturierung aufweisen können.

Es gibt diverse Verfahren zur Herstellung von zellularen metallischen Werkstoffen, vgl. etwa J. Banhart: "Manufacture, characterisation and application of cellular metals and metal foams", Progress in Materials Science 46 (2001) 559-632, worin eine Übersicht über die verschiedenen Herstellverfahren und Anwendungen gegeben ist. Danach können zellulare Metalle auf vier verschiedenen Prozessrouten hergestellt werden:
a) durch Vakuumabscheidung von Metalldampf,
b) in der Flüssigmetallphase,
c) auf pulvertechnologische Weise,
d) Herstellung mittels Metallionen durch elektrochemisches Abscheiden.

Gemäß b) kann die Herstellung durch direktes Schäumen mit Gas in der Flüssigmetallphase oder durch direktes Schäumen mit gasfreisetzenden Reagenzien durchgeführt werden. Weiterhin ist eine Herstellung durch "Gasars" (Feststoff-Gaseutektische Verfestigung unter Ausnutzung der Tatsache, dass einige Flüssigmetalle ein eutektisches System mit Wasserstoffgas bilden) möglich. Weiterhin ist ein Schmelzen von verfestigten Pulvern möglich. Dieses Verfahren beginnt mit dem Mischen von Metallpulvern und Bindern mit einem gasfreisetzenden Reagenz, wonach die Mischung kompaktiert wird, um ein dichtes, Halbzeug zu erhalten. Durch eine anschließende Wärmebehandlung bei Temperaturen in der Nähe des Schmelzpunktes des Matrixmaterials, zersetzt sich das gasfreisetzende Reagenz, wodurch das kompaktierte Halbzeug expandiert und eine hochporöse Struktur bildet. Dieses Verfahren ist mit Aluminium und TiH2-Pulver als gasfreisetzendes Reagenz bekannt. Auch Stähle können geschäumt werden, z.B. unter Verwendung von Carbonaten, wie etwa SrCO3. Auch Metallhydride können verwendet werden.

Gemäß c) auf pulvertechnologische Weise kann ein Sintern von Metallpulvern und Fasern durchgeführt werden. Im Allgemeinen wird zunächst ein Metallpulver hergestellt und fraktioniert und vorbereitet, dann kompaktiert oder geformt und schließlich gesintert. Indem nur geringfügig kompaktiert wird, kann eine hohe Porosität erreicht werden. Alternativ können beim Kompaktieren Gase eingeschlossen werden, die beim späteren Sintern zum Aufblähen führen. Ferner können Metallschäume mittels eines Schlickers aus Metallpulvern, gasfreisetzenden Reagenzien und Zusatzstoffen erzeugt werden. Der Schlicker wird nach dem Mischen in eine Form gegossen und dann zunächst bei erhöhten Temperaturen gehalten, bis die gasfreisetzenden Reagenzien expandieren und der expandierte Schlicker vollständig getrocknet wird. Dieser ergibt nach dem Sintern einen Metallschaum von relativ hoher Festigkeit. Ferner können zellulare Metalle auf der Basis von abtandshaltenden Füllstoffen hergestellt werden.

Schließlich können hohle Kugeln verwendet werden, um hochporöse Strukturen zu erzeugen, indem die einzelnen Kugeln durch Sintern miteinander verbunden werden.

Es stehen also diverse Herstellmöglichkeiten für die Herstellung von Einsätzen zur Verfügung.

Erstaunlicherweise hat sich gezeigt, dass durch die Verwendung mindestens eines Einsatzes aus einem zellularen Metall eine erheblich verbesserte Wärmeübertragung beim Rekuperator erreicht werden kann, selbst ohne dass der Einsatz stoffschlüssig gehalten ist. Auf diese Weise kann ein deutlicher verbesserter Wirkungsgrad erzielt werden.

Gleichzeitig wird eine deutlich reduzierte Schallemission erreicht.

Gemäß einer weiteren Ausgestaltung der Erfindung sind zumindest an der Innenseite oder der Außenseite des Rekuperators jeweils eine Mehrzahl von Erhöhungen und Vertiefungen vorgesehen, wobei Einsätze aus zellularen Metallen vorzugsweise zumindest teilweise in die Vertiefungen eingreifen.

Durch eine derartige Ausgestaltung des Rekuperators ergibt sich eine deutlich verbesserter Wirkungsgrad in Folge verbessertem Wärmeaustausch.

In vorteilhafter Weiterbildung der Erfindung sind die Erhöhungen als Rippen ausgebildet, die durch die Vertiefungen in Form von Zwischenräumen voneinander getrennt sind. Die Einsätze sind hierbei in den Vertiefungen zwischen benachbarten Erhöhungen aufgenommen.

Gemäß einer Weiterbildung der Erfindung sind die Vertiefungen hierbei an ihrer Oberfläche aufgeraut.

Durch diese Maßnahme wird eine Verbesserung des Sitzes zwischen den Einsätzen und dem Rekuperatorkörper als auch eine Verbesserung des Wärmeübergangs erreicht.

Gemäß einer weiteren Ausgestaltung der Erfindung sind die Einsätze aus den zellularen Metallen in den Vertiefungen eingepresst.

Dies erlaubt eine einfache und kostengünstige Herstellung bei einem dennoch hohen Wirkungsgrad. Ein nachträglicher Austausch des Rekuperators ist hierbei grundsätzlich möglich.

Ferner können die Einsätze durch Hinterschneidungen in den Vertiefungen gehalten sein oder durch ein angrenzendes Rohr (z.B. ein umschließendes Abgasrohr) gehalten sein.

Dies ermöglicht eine sichere Halterung der Einsätze, selbst wenn es sich bei dem Rekuperatur um ein Keramikbauteil, wie etwa aus SiSiC handelt.

Gemäß einer weiteren Ausgestaltung der Erfindung sind Einsätze aus zellularen Metallen, die an der Außenseite in Vertiefungen eingesetzt sind, durch eine durchgehende Lage von außen gehalten.

Dies ermöglicht eine besonders kostengünstige Herstellung. Durch die durchgehende Lage, die z.B. außen um den Rekuperator herumgewickelt werden kann, ergibt sich eine sehr einfache Montage. Soweit an der Außenoberfläche des Rekuperators zur Wirkungsgradverbesserung Rippen bzw. Erhöhungen und Vertiefungen gebildet sind, können Einsätze in die Vertiefungen von außen eingesetzt werden und dann durch eine umgebende durchgehende Lage teilweise in die Vertiefungen eingepresst werden.

Auch können die Einsätze lediglich in die Vertiefungen eingedrückt sein, was durch ihre Außenoberfläche erleichtert sein kann, die durch übliche Bearbeitungsverfahren, wie Laserschneiden, Wasserstrahlschneiden oder Erodieren, durch die eine leicht verhakende Außenoberfläche entsteht. Eine Fixierung kann durch eine umgrenzende durchgehende Lage aus einem zellularen Metall und ggf. ein umgebendes Abgasleitrohr erfolgen.

Auch ohne eine stoffschlüssige Verbindung ergibt sich auf diese Weise eine sehr gute Wärmeübertragung.

In bevorzugter Weiterbildung der Erfindung wird bei der Montage zunächst ein Kleber verwendet und dann eine Fixierung durch ein angrenzendes Rohr vorgenommen. Der Kleber löst sich bei einer anschließenden Glühbehandlung z.B. bei etwa 300 °C rückstandsfrei auf, so dass die Einsätze durch das Rohr gehalten sind.

Auf diese Weise ergibt sich eine erleichterte Montage bei einer gleichzeitig sicheren Fixierung.

Gemäß einer weiteren Ausgestaltung der Erfindung sind die Einsätze aus den zellularen Metallen in den Vertiefungen stoffschlüssig gehalten, was etwa mittels Galvanisieren, Löten, Schweißen oder Einsintern erfolgen kann.

Hierdurch kann der Wirkungsgrad noch etwas gesteigert werden.

Gemäß einer weiteren Ausgestaltung der Erfindung bestehen die Einsätze aus offenporigem Metallschaum.

Durch die offenporige Struktur wird ein Durchströmen durch Fluide bzw. Gase erleichtert. Außerdem kann eine Anpassung im Hinblick auf den Druckverlust durch die Art und Dichte der Struktur erzielt werden.

Da die Verwendung einer Presspassung hierbei wegen des Keramikmaterials nicht in Frage kommt, kann eine sichere Halterung hierbei insbesondere mittels Hinterschneidungen, Profilierungen oder dergleichen erreicht werden. Wie vorstehend bereits erwähnt, kommt auch eine Halterung durch ein angrenzendes Rohr, z.B. Abgasleitrohr, in Frage. Natürlich kann auch eine durchgehende Lage aus einem zellularen Metall verwendet werden. Alternativ oder zusätzlich kann eine stoffschlüssige Verbindung, etwa mittels Kleben, verwendet werden.

Gemäß einer weiteren Ausgestaltung der Erfindung erstrecken sich die Einsätze nur über einen Teilbereich des Rekuperators.

Dies ist insbesondere dann zweckmäßig, wenn der Rekuperator aus einem Keramikwerkstoff, wie etwa SiSiC, besteht. Dann werden die Einsätze vorzugsweise nur im thermisch weniger beanspruchten, kälteren Bereich des Rekuperators eingesetzt, da die thermische Belastbarkeit der aus Metall bestehenden Einsätze begrenzt ist.

Eine Halterung der Einsätze zwischen den Vertiefungen kann auch etwa durch das umgebende Abgasleitrohr des Rekuperatorbrenners gewährleistet werden.

Durch die Erfindung wird ferner ein Rekuperatorbrenner angegeben, mit einem Brennerkopf, an dem ein Brennrohr und ein Abgasleitrohr gehalten sind, wobei zwischen dem Brennrohr und dem Abgasleitrohr ein Rekuperator der vorhergehend beschriebenen Art gehalten ist.

Ein derartiger Rekuperatorbrenner zeichnet sich durch einen erhöhten Wirkungsgrad im Vergleich zu herkömmlichen Rekuperatorbrennern bei einer gleichbleibenden oder geringeren Geräuschentwicklung aus.

Gemäß einer weiteren Ausgestaltung der Erfindung ist zwischen dem Rekuperator und dem Abgasleitrohr und zwischen dem Brennrohr und dem Rekuperator jeweils ein Spalt gebildet, der zumindest teilweise mit den Einsätzen ausgefüllt ist.

Insgesamt wird der Wirkungsgrad noch weiter verbessert, wenn die Spalte zwischen Brennrohr und Rekuperator bzw. zwischen Abgasleitrohr und Rekuperator weitgehend mit den Einsätzen verschlossen sind.

Gemäß einer weiteren Ausgestaltung der Erfindung, weist ein Rekuperatorbrenner mit einem Brennerkopf, an dem ein Brennrohr und ein Abgasleitrohr gehalten sind, zwischen dem Brennrohr und dem Abgasleitrohr einen Rekuperator auf, wobei der Brennerkopf als ein abgasdurchströmtes Luftteil ausgebildet ist, das einen Abgaskanal und einen Zuluftkanal aufweist, die koaxial zueinander angeordnet sind, wobei der Zuluftkanal einen ersten Zuluftkanalabschnitt aufweist, der den Abgaskanal zumindest teilweise koaxial von außen umschließt und der Abgaskanal einen zweiten Zuluftkanalabschnitt teilweise koaxial von außen umschließt.

Durch die Ausgestaltung des erfindungsgemäßen Rekuperatorbrenners ist ein verstärkter Wärmeaustausch innerhalb des Brennerkopfs gewährleistet, in dem der Abgasstrom beidseitig vom Verbrennungsluftstrom umfasst wird und somit der Verbrennungsluftstrom sowohl im Gleichstrom als auch im Gegenstrom zum Abgasstrom geführt ist.

Hierdurch ergibt sich eine deutliche Verbesserung des feuerungstechnischen Wirkungsgrades.

In Kombination mit dem vorstehend beschriebenen Rekuperator kann eine weitere Wirkungsgradverbesserung erzielt werden, die oberhalb von 84 % bis 85 % liegt, etwa im Bereich von bis zu 90 %.

Vorzugsweise ist hierbei der erste Zuluftkanalabschnitt über einen radialen Verbindungsabschnitt mit dem zweiten Zuluftkanalabschnitt verbunden. Der Abgaskanal grenzt also sowohl von innen als auch von außen an den Zuluftkanal an, so dass sich eine wirkungsvolle Vorwärmung der Zuluft ergibt.

Gemäß einer weiteren Ausgestaltung der Erfindung ist der Rekuperator an den Abgaskanal angesetzt, derart, dass ein axiales Überströmen von Abgas von der Außenseite des Rekuperators in den Abgaskanal ermöglicht ist.

Auf diese Weise ist eine vorteilhafte Montage und ein günstiges strömungstechnisches Verhalten gewährleistet.

Ferner kann der erfindungsgemäße Rekuperator auch bei einem Rekuperatorbrenner mit seitlichem Stutzen zur Abgasabfuhr und zur Vorwärmung von Verbrennungsluft verwendet werden.

Dies ermöglicht auch eine Nachrüstung von bestehenden Brennern mit dem erfindunggemäßen Rekuperator, da in diesem Fall nur der Stutzen entsprechend angepasst werden muss.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, insofern solche unter die Definition des Gegenstandes der Patentansprüche fallen.

Weitere Merkmale und Vorteile ergeben sich aus der nachfolgenden Beschreibung bevorzugter Ausführungsbeispiele unter Bezugnahme auf die Zeichnung. Es zeigen:
- Fig. 1: einen Längsschnitt durch einen erfindungsgemäßen Rekuperatorbrenner;
- Fig. 2: einen vergrößerten Längsschnitt durch das vordere Ende des Rekuperatorbrenners, bei dem zusätzlich noch das Abgasleitrohr aufgesetzt ist;
- Fig. 3: eine perspektivische Ansicht des Rekuperators gemäß Fig. 1;
- Fig. 4: einen vergrößerten Querschnitt des Rekuperators, jedoch ohne Einsätze aus zellularen Metallen;
- Fig. 5: einen gegenüber der Ausführung gemäß Fig. 4 leicht abgewandelte Ausführung des Rekuperators mit veränderter Rippenform, wiederum ohne Einsätze aus zellularen Metallen;
- Fig. 6: ein Foto der Außenoberfläche eines erfindungsgemäßen Rekuperators;
- Fig. 7: einen Teilschnitt durch den erfindungsgemäßen Rekuperator in vergrößerter Darstellung, mit einem schematisch angedeuteten Einsatz zwischen zwei benachbarten Rippen;
- Fig. 8: einen Teilschnitt durch eine abgewandelte Ausführung eines erfindungsgemäßen Rekuperators, an dem Hinterschneidungen zur Befestigung der Einsätze vorgesehen sind;
- Fig. 9: eine teilweise geschnittene Seitenansicht einer abgewandelten Ausführung eines Rekuperatorbrenners mit keramischem Rekuperator, bei dem sich die Einsätze aus zellularen Metallen nur über einen kühleren Teilbereich des Rekuperatos erstrecken;
- Fig. 10: einen vergrößerten Schnitt durch den Rekuperatorbrenner gemäß Fig. 8;
- Fig. 11: eine weitere Abwandlung eines Rekuperators im Längsschnitt mit seitlich angeflanschtem Stutzen zur Abgasabfuhr und Verbrennungsluftzufuhr mittels eines errfindungsgemäßen Rekuperators und

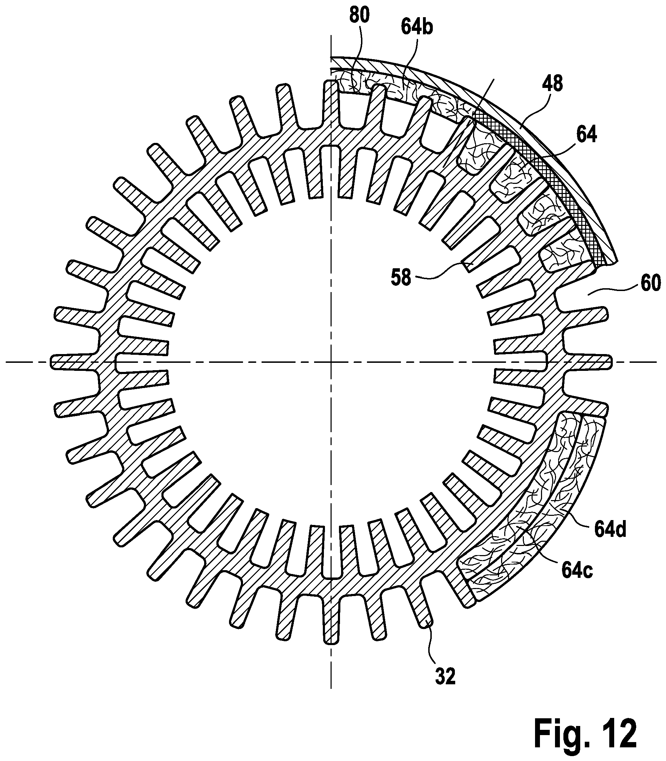

- Fig. 12: weitere Ausgestaltungen eines erfindungsgemäßen Rekuperators in drei Varianten, mit (a) einer Lage aus einem zellularen Metall, die teilweise in die Vertiefungen zwischen den Rippen eingepresst ist und durch ein umschließendes Abgasleitrohr gehalten ist, (b) Einsätzen, die zunächst in die Vertiefungen eingedrückt sind und dann durch eine umschließende Lage aus einem zellularen Metall mit umgebenden Abgasleitrohr fixiert sind, und (c) zwei durchgehenden Außenlagen aus einem zellularen Metall, die unmittelbar auf einer Rekuperatorfläche aufliegen, ohne dass außen Rippen vorgesehen sind.

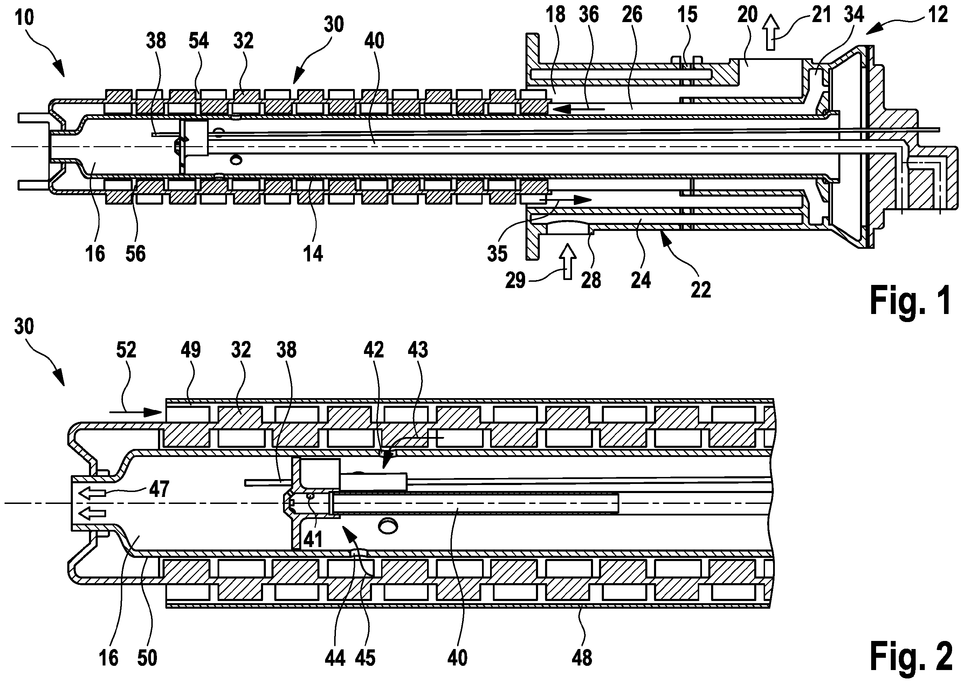

In Fig. 1 ist ein erfindungsgemäßer Rekuperatorbrenner im Längsschnitt dargestellt und insgesamt mit der Ziffer 10 bezeichnet.

Es sei angemerkt, dass die Figuren nicht maßstabsgerecht gezeichnet sind und teilweise aus Gründen der besseren Erkennbarkeit in den Proportionen abgewandelt

Der Rekuperatorbrenner 10 weist einen Brennerkopf 12 auf, an dem ein Brennrohr 14 gehalten ist, an dessen äußeren Ende eine Brennkammer 16 gebildet ist, in die über eine Brennstofflanze 40 Brennstoff zuführbar ist.

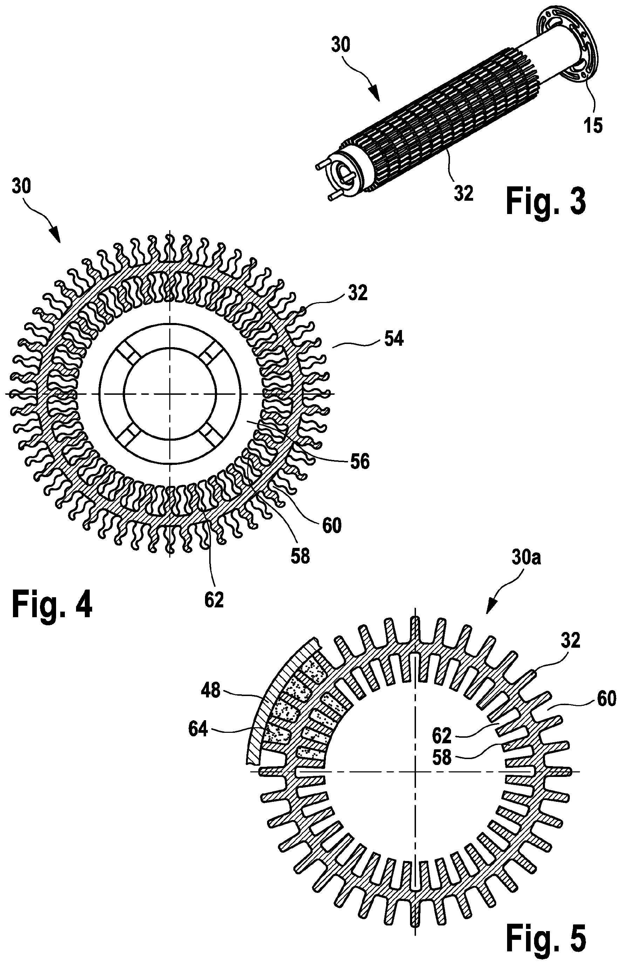

Am Brennerkopf 12 ist ferner ein Rekuperator 30 gehalten, der mit einem Flansch 15 in einem gewissen Abstand vom äußeren axialen Ende des Brennerkopfes 12 daran aufgenommen ist. Der Rekuperator 30 weist eine Vielzahl von Rippen 32 auf, wie nachfolgend noch näher anhand von Fig. 3 bis 5 beschrieben wird.

Der Brennerkopf 12 weist gemäß Fig. 1 einen seitlichen Zuluftstutzen 28 auf, in den Zuluft gemäß dem Pfeil 29 in einen Zuluftkanal 22 eintritt. Der Zuluftkanal 22 weist einen ersten Zuluftkanalabschnitt 24 auf, in den unmittelbar der Zuluftstutzen 28 mündet. Dieser erste Zuluftkanalabschnitt 24 erstreckt sich koaxial zum Brennrohr 14 und ist, wie aus Fig. 2 erkennbar, über einen Verbindungsabschnitt 34 mit einem zweiten Zuluftkanalabschnitt 26 verbunden, der sich gleichfalls koaxial zum Brennrohr 14 erstreckt, jedoch in unmittelbarer Nachbarschaft zum Brennrohr 14, während der erste Zuluftkanalabschnitt 24 radial nach außen gegenüber dem zweiten Zuluftkanalabschnitt 26 versetzt ist. Zwischen diesen Zuluftkanalabschnitten 24 und 26 erstreckt sich ein Abgaskanal 18. Der Abgaskanal 18 grenzt also auf seiner Innenseite an den zweiten Zuluftkanalabschnitt 26 an und grenzt auf seiner Außenseite an den ersten Zuluftkanalabschnitt 24 an.

Aus Fig. 1 ist zu ersehen, dass der Abgaskanal 18 über einen Abgasstutzen 20 radial nach außen ausmündet, so dass das Abgas gemäß dem Pfeil 21 nach außen austritt und in eine geeignete angeschlossene Abgasleitung geführt wird. In den Abgaskanal 18 tritt Abgas in Axialrichtung an der Außenseite 54 des Rekuperators 30 ein, wie durch den Pfeil 35 angedeutet ist.

Beim Rekuperator 30 handelt es sich im Prinzip um ein Rohr, entlang dessen Außenseite 54 eine Folge von Rippen 32 ausgebildet ist und an dessen Innenseite 56 gleichfalls eine Folge von Rippen 58 vorgesehen ist.

Wie aus Fig. 3 zu erkennen, erstreckt sich jeweils ein bestimmter axialer Abschnitt von Rippen 32 um den gesamten Außenumfang, während die nachfolgenden Rippen 32 zu den vorhergehenden Rippen versetzt angeordnet sind. Es sind natürlich auch Anordnungen ohne Versatz denkbar.

In entsprechender Weise ist die Anordnung auf der Innenseite 56 des Rekuperators 30 getroffen.

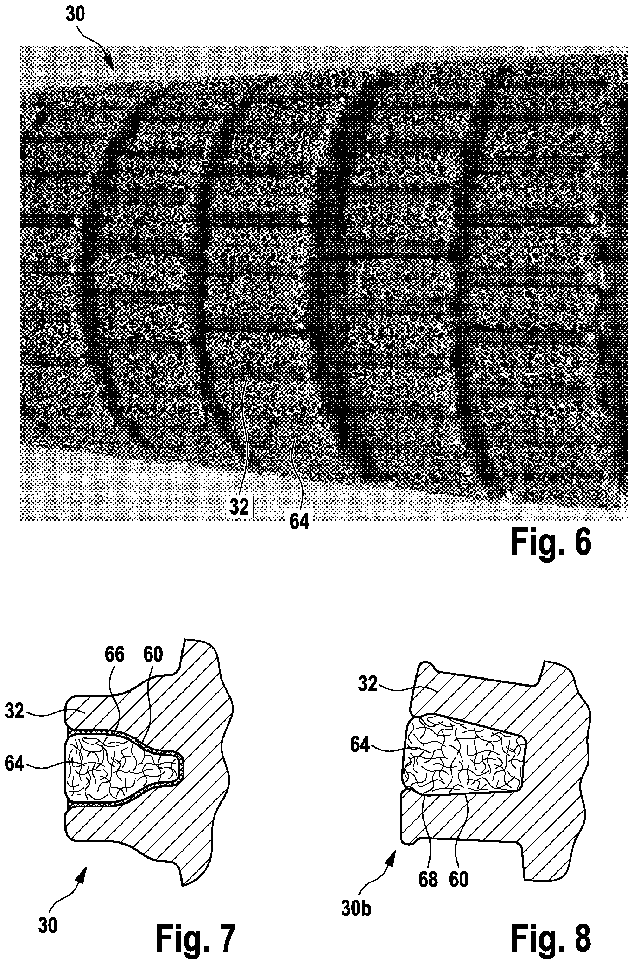

Erfindungsgemäß sind nun die Zwischenräume oder Vertiefungen 60 zwischen benachbarten Rippen 32 jeweils mit einem Einsatz 64 (vgl. Fig. 6, 7, 8) aus einem zellularen Metall versehen.

Hierbei handelt es sich vorzugsweise um einen offenporigen Metallschaum. Das zellulare Metall besteht aus einer hochwarmfesten Legierung, wobei diese Legierung Aluminium als Legierungsbestandteil enthält, und eine FeCrAI-Legierung oder eine CrNi-Al-Legierung ist. Hierdurch ergibt sich eine hohe Korrosionsbeständigkeit durch die Bildung von Al2O3 auf der Oberfläche.

Vorzugsweise ist die Außenoberfläche jeder Vertiefung 60 aufgeraut, z.B. durch Sandstrahlen, und der jeweilige Einsatz 64 ist in die Vertiefung 60 eingpresst und darin mit einer Presspassung gehalten.

Alternativ ist es gemäß Fig. 7 denkbar, eine stoffschlüssige Verbindung, etwa durch einen Kleber oder ein Hartlot, herzustellen.

In entsprechender Weise sind die Einsätze an der Innenseite 56 jeweils in die Zwischenräume oder Vertiefungen 62 zwischen benachbarten Rippen 58 eingepresst.

Durch diese Einsätze 64 wird der Wirkungsgrad des Rekuperators 30 deutlich verbessert.

Wie aus Figur 1 zu erkennen ist, gelangt der Hauptteil der Verbrennungsluft durch zugeordnete Öffnungen 42, 44 im Brennrohr 14 in das Innere des Brennrohrs 14. Über zugeordnete Öffnungen in einer Drallplatte 41 erfolgt schließlich eine Vermischung mit dem über die Brennstofflanze 40 zugeführten Brennstoff und ein Austritt in die Brennkammer 16. Von dort erfolgt der Austritt in den Brennraum, wie durch den Pfeil 47 in Fig. 2 angedeutet ist. Ein kleiner Teil der Verbrennungsluft strömt außen an der Brennkammer 16 vorbei und tritt an der Rekuperatorspitze aus.

Eine zugeordnete Zündelektrode 38 sorgt für die Zündung des Gemisches. Die Flammen treten über das axiale Ende aus der Brennkammer 16 in das zu beheizende Volumen aus. Abgase aus den zu beheizenden Volumen gelangen gemäß Fig. 2 auf der Außenseite in den Spalt 49 zwischen dem Abgasleitrohr 48 und dem Rekuperator 30, wie durch den Pfeil 52 in Fig. 2 angedeutet ist, und durchströmen einerseits den Spalt 49 andererseits die Zwischenräume zwischen den Rippen 32 durch die Einsätze 64 und gelangen schließlich am Ende der Rippenstruktur in Axialrichtung in den Abgaskanal 18 des Brennerkopfes 12.

Auch zwischen dem Rekuperator 30 und der Außenoberfläche des Brennrohrs 14 besteht ein gewisser Spalt 50 gemäß Fig. 2. Die Einsätze 64 erstrecken sich möglichst soweit in Radialrichtung, dass der Spalt 50 soweit wie möglich verringert wird.

Im Brennerkopf 12 ergibt sich ein Wärmeübergang vom Abgas im Abgaskanal 18 auf die Verbrennungsluft im zweiten Zuluftkanalabschnitt 26 im Gegen¬stromprinzip. Zusätzlich ergibt sich im Brennerkopf 12 noch ein weiterer Wärmeübergang vom Abgas im Abgaskanal 18 auf die Verbrennungsluft im ersten Zuluftkanalabschnitt 24 im Gleichstrom.

Durch diese doppelte Vorwärmung der Zuluft im Brennerkopf 12 ergibt sich eine weitere Wirkungsgraderhöhung.

Durch die erste Maßnahme, Verwendung von Einsätzen 64 aus Metallschaum in den Zwischenräumen zwischen den Rippen 58 sowohl auf der Außenseite 54 als auch auf der Innenseite 56 des Rekuperators, ergibt sich eine Erhöhung des feuertechnischen Wirkungsgrades auf etwa 84 % bis 85 %. Dies liegt ca. 9 % höher als bei vergleichsweise Standardbrennern mit Rippenrekuperatoren (jeweils bei einer Abgaseintrittstemperatur von 1000 °C).

Ferner weist der erfindungsgemäße Rekuperatorbrenner 10 einen vergleichsweise niedrigen Schalldruckpegel auf. Dieser liegt bei ca. 60 dB (A), während Standardbrenner mit Rippenrekuperatoren bei 71 bis 73 dB (A) liegen.

Durch die zweite Maßnahme, Vorwärmung der Zuluft im Brennerkopf 12 sowohl von innen als auch von außen durch die beiden Zuluftkanalabschnitte 24, 26, ergibt sich eine weitere Erhöhung des feuertechnischen Wirkungsgrades, so dass der Gesamtwirkungsgrad bei bis zu etwa 90 % liegt.

Fig. 4 zeigt den Rekuperator 30 gemäß Fig. 1 im Querschnitt.

Eine gegenüber der Ausführung des Rekuperators 30 leicht abgewandelte Ausführung des Rekuperators ist in Fig. 5 dargestellt und insgesamt mit 30a bezeichnet. Für entsprechende Teile werden hierbei entsprechende Bezugsziffern verwendet. Die Rippen 32 sind hierbei nicht gewellt, wie bei der Ausführung gemäß Fig. 4, sondern glatt.

In Fig. 5 sind zusätzlich die Einsätze 64 dargestellt. Während die Einsätze 64 in den Vertiefungen 62 an der Innenseite auf Grund der Form gehalten sind, ist auf der Außenseite eine zusätzliche Befestigung notwendig. Hierbei wird das umschließende Abgasleitrohr 48 verwendet, um die Einsätze 64 in den Vertiefungen 60 zu halten.

Auf dem Foto gemäß Fig. 6 ist die offenporige, zellulare Struktur der Einsätze gut zu erkennen. Fig. 7 zeigt eine Abwandlung, wonach die Einsätze 64 in den Vertiefungen 60 durch eine Klebeschicht 66 gehalten sind.

Fig. 8 zeigt eine Abwandlung des Rekuperators 30b, bei dem die Ein¬sätze mittels Hinterschneidungen 68 in den Vertiefungen 60 gehalten sind. Die Rippen 32 sind hierbei an ihrem äußeren Enden jeweils T-artig zu beiden Seiten hin verbreitert.

Eine derartige Ausführung ermöglicht auch eine Befestigung bei einem keramischen Rekuperator 30b durch axiales Einschieben der Einsätze 64.

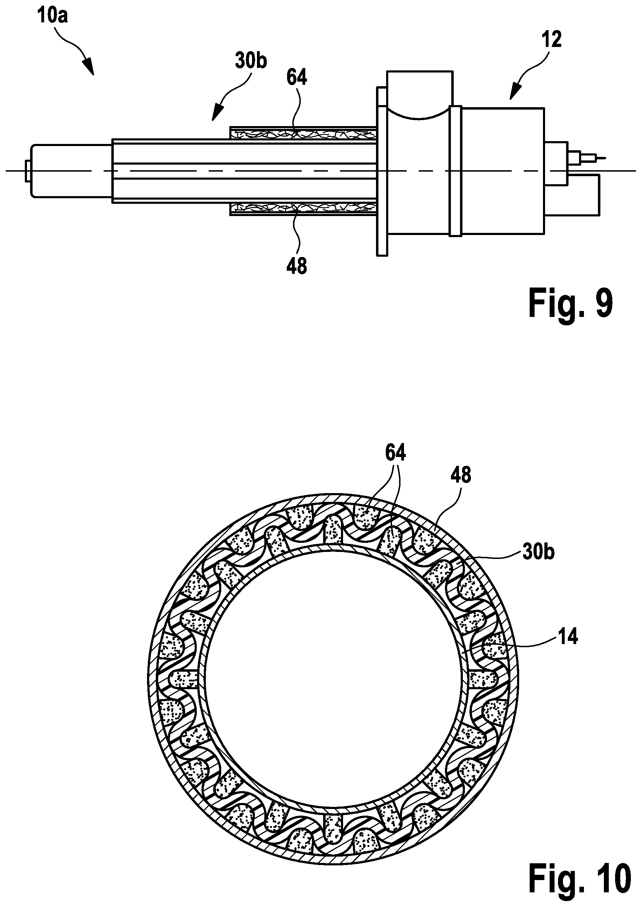

Fig. 9 zeigt einen Rekuperatorbrenner mit keramischem Rekuperator 30 in teilweise geschnittener Seitenansicht. Hierbei erstrecken sich die Einsätze 64 vorzugsweise nur über einen Teil des Rekuperators 30b, nämlich über den kälteren Teil, der sich auf maximal etwa 1000 bis 1050 °C erwärmt, da die Temperaturbeständigkeit der metallischen Einsätze 64 begrenzt ist.

Fig. 10 zeigt den keramischen Rekuperator aus SiSiC 30b mit den Ein¬sätzen 64 Wegen des gewellten Querschnitts des Rekuperators 30b ist eine Fixierung der Einsätze 64 durch Einpressen oder durch Hinterschnitte kaum möglich. Stattdessen werden die Einsätze 64 durch die angrenzenden Rohre (außen durch das Abgasleitrohr 48 und innen durch ein Fixierungsrohr) in den jeweiligen Vertiefungen gehalten.

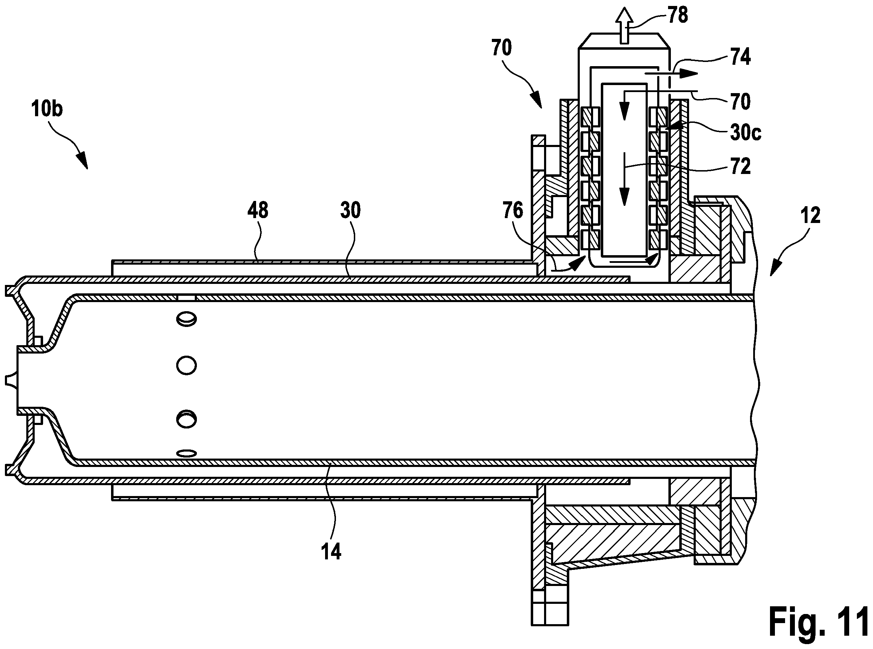

Eine weitere Abwandlung eines Rekuperatorbrenners ist in Fig. 11 dargestellt und insgesamt mit der Ziffer 10b bezeichnet. Dieser Rekuperatorbrenner besitzt einen seitlichen Stutzen 70, über den das Abgas abgeführt wird und die Verbrennungsluft vorgewärmt wird. Die Zuluft wird gemäß der Pfeile 70, 72 zentral zugeführt, wird im Rekuperator 30c am Stutzen 70 vorgewärmt und wird gemäß dem Pfeil 74 wieder ausgeleitet und dann in nicht näher dargestellter Weise in den Zwischenraum zwischen dem Rekuperator 30 und dem Brennrohr 14 geführt.

Das Abgas gelangt, wie durch den Pfeil 76 angedeutet, zum kurzen Rekuperator 30c am Stutzen 70, wärmt die Zuluft vor und tritt schließlich bei 78 in eine angeschlossene Abgasleitung (nicht dargestellt) aus. Auch hier befinden sich im kurzen Rekuperator 30c Einsätze 64, um die Wärmeübertragung zu verbessern (nicht dargestellt).Ein derartiger Rekuperator 30c am Stutzen 70 lässt sich leicht bei bestehenden Rekuperatorbrennern nachrüsten.

Fig. 12 zeigt einen weiteren Querschnitt durch einen erfindungsgemäßen Rekuperator mit drei weiteren Abwandlungen.

Bei der ersten Ausführung ist ein Einsatz 64b aus einem zellularen Metall als durchgehende Lage ausgebildet, die lediglich außen um die äußeren Rippen 32 herum gewickelt ist und durch ein umschließendes Abgasleitrohr 48 gehalten ist. Hierbei bildet das zellulare Metall kleine Vorsprünge 80 aus, die in die Vertiefungen hinein etwas hervorstehen. Dies führt zu einer vereinfachten, sehr kostengünstigen Montage.

Im daran angrenzenden Teil von Fig, 12 sind Einsatze 64 dargestellt, die in die Vertiefungen 60 von außen eingesetzt sind und durch eine umgebende Lage 64b aus einem zellularen Metall und ein umgebendes Abgasleitrohr gehalten sind. Werden die Einsätze zuvor mittels eines geeigneten Verfahrens, wie etwa durch Wasserstrahlschneiden Laserschneiden, oder Erodieren hergestellt, so haben diese in der Regel eine leicht verhakende Außenoberfläche, so dass sich diese beim Einpressen in die Vertiefungen 60 leicht verhaken und anschließend dann durch eine umgebende durchgehende Lage aus einem zellularen Metall mit einem umschließenden Abgasleitrohr 48 sicher fixiert werden können. Hierdurch ergibt sich ein besonders hoher Wirkungsgrad bei leicht erhöhtem Montageaufwand.

Schließlich ist im rechten unteren Teil von Fig. 12 eine besonders einfache und kostengünstige Befestigung lediglich durch Umwickeln mit mindestens einerdurchgehenden Lage, im dargestellten Fall mit zwei Lagen 64c, 64d aus einem zellularen Metall gezeigt, wobei auf die Ausbildung von Rippen (zumindest auf der Außenseite) verzichtet wurde. Dies ist eine besonders einfache Ausführung mit einem etwas reduzierten Wirkungsgrad aber einer sehr kostengünstigen Montage. Grundsätzlich kann die Innenseite mit Rippen und Einsätzen versehen sein oder aber auch ohne Rippen und ggf, mit einer durchgehenden Lage aus einem zellularen Metall ausgebildet sein.

## Patentansprüche

1. Rekuperator für einen Rekuperatorbrenner (10) zur Vorwärmung von Verbrennungsluft mittels Abgaswärme, wobei der Rekuperator (30, 30a, 30b, 30c) rohrförmig mit einer Innenseite (56) und einer Außenseite (54) ausgebildet ist, wobei der Rekuperator (30) aus Metall, insbesondere Stahl, oder aus Keramik besteht, , wobei zumindest an der Innenseite (56) oder der Außenseite (54) des Rekuperators (30, 30a, 30b, 30c) jeweils eine Mehrzahl von Erhöhungen (32, 58) und Vertiefungen (60, 62) vorgesehen sind, und wobei zumindest auf der Innenseite (56) oder auf der Außenseite (54) Einsätze (64) aus einem zellularen Metall aufgenommen sind, die zumindest teilweise in die Vertiefungen (60, 62) eingreifen und die vorzugsweise in Längsrichtung des Rekuperators durchströmbar sind, **dadurch gekennzeichnet, dass** die Einsätze (64) aus einer warmfesten Legierung bestehen, die Aluminium enthält und mindestens bis 1000 °C temperaturbeständig ist, wobei die warmfeste Legierung eine FeCrAl-Legierung oder eine CrNi-Al-Legierung ist.

2. Rekuperator nach Anspruch 1, **dadurch gekennzeichnet, dass** die Erhöhungen (32, 58) als Rippen ausgebildet sind, die durch die Vertiefungen (60, 62) in Form von Zwischenräumen voneinander getrennt sind, wobei die Einsätze (64) vorzugsweise in den Vertiefungen (60, 62) durch Hinterschneidungen (68) gehalten sind.

3. Rekuperator nach einem der vorhergehenden Ansprüche, **dadurch gekennzeichnet, dass** die Einsätze (64) in die Vertiefungen (60, 62) eingepresst sind.

4. Rekuperator nach einem der vorhergehenden Ansprüche, bei dem an der Außenseite in Vertiefungen (60, 62) eingesetzte Einsätze (64) durch eine durchgehende Lage von außen gehalten sind.

5. Rekuperator nach einem der Ansprüche 1 bis 4, **dadurch gekennzeichnet, dass** die Vertiefungen (60, 62) an ihrer Oberfläche aufgeraut sind.

6. Rekuperator nach einem der Ansprüche 1 bis 5, **dadurch gekennzeichnet, dass** die Einsätze (64) aus den zellularen Metallen in den Vertiefungen (60, 62) stoffschlüssig gehalten sind, vorzugsweise mittels Kleben, Galvanisieren, Löten, Schweißen oder Einsintern.

7. Rekuperator nach einem der vorhergehenden Ansprüche, **dadurch gekennzeichnet, dass** die Einsätze (64) durch ein Rohr (48) von außen oder innen gehalten sind.

8. Rekuperator nach einem der vorhergehenden Ansprüche, **dadurch gekennzeichnet, dass** die Einsätze (64) in Form von offenporigem Metallschaum ausgebildet sind.

9. Rekuperator nach einem der vorhergehenden Ansprüche, **dadurch gekennzeichnet, dass** sich die Einsätze (64) in Längsrichtung nur über einen Teilbereich des Rekuperators (30b) erstrecken.

10. Rekuperatorbrenner mit einem Brennerkopf (12), an dem ein Brennrohr (14) und ein Abgasleitrohr (48) gehalten sind, wobei zwischen dem Brennrohr (14) und dem Abgasleitrohr (48) ein Rekuperator (30, 30a, 30b, 30c) nach einem der vorhergehenden Ansprüche gehalten ist, wobei vorzugsweise zwischen dem Rekuperator (30, 30a, 30b, 30c) und dem Abgasleitrohr (48) und zwischen dem Brennrohr (14) und dem Rekuperator (30, 30a, 30b, 30c) jeweils ein Spalt (49, 50) gebildet ist, der zumindest teilweise mit den Einsätzen (64) ausgefüllt ist.

11. Rekuperatorbrenner mit einem Brennerkopf (12), an dem ein Brennrohr (14) und ein Abgasleitrohr (48) gehalten sind, mit einem Rekuperator (30, 30a, 30b), insbesondere nach einem der Ansprüche 1 bis 9, und mit einem Stutzen (70) zur seitlichen Abführung des Abgases aus dem Brennerkopf (12) und zur Zuführung von Zuluft in den Brennerkopf (12), **dadurch gekennzeichnet, dass** am Stutzen (70) ein weiterer Rekuperator (30c) nach einem der Ansprüche 1 bis 9 vorgesehen ist.

12. Rekuperatorbrenner nach Anspruch 10 oder 11, **dadurch gekennzeichnet, dass** der Brennerkopf (12) als ein abgasdurchströmtes Luftteil ausgebildet ist, das einen Abgaskanal (18) und einen Zuluftkanal (22) aufweist, die koaxial zueinander angeordnet sind, wobei der Zuluftkanal (22) einen ersten Zuluftkanalabschnitt (24) aufweist, der den Abgaskanal (18) zumindest teilweise koaxial von außen umschließt und der Abgaskanal (18) einen zweiten Zuluftkanalabschnitt (26) teilweise koaxial von außen umschließt.

13. Rekuperatorbrenner nach Anspruch 12, **dadurch gekennzeichnet, dass** der erste Zuluftkanalabschnitt (24) über einen Verbindungsabschnitt (34) mit dem zweiten Zuluftkanalabschnitt (26) verbunden ist, wobei vorzugsweise der Rekuperator (30, 30a, 30b) an den Abgaskanal (30) angesetzt ist, derart, dass ein axiales Überströmen von Abgas von der Außenseite (54) des Rekuperators (30, 30a, 30b) in den Abgaskanal (18) ermöglicht ist.

## Claims

1. Recuperator for a recuperator burner (10) for preheating combustion air by means of exhaust gas heat, wherein the recuperator (30, 30a, 30b, 30c) is of tubular design with an inside (56) and an outside (54), wherein the recuperator (30) is composed of metal, in particular steel, or of a ceramic, wherein at least on the inside (56) or on the outside (54) of the recuperator (30, 30a, 30b, 30c) there is provided a plurality of elevations (32, 58) and depressions (60, 62), and wherein at least on the inside (56) or on the outside (54) inserts (64) composed of cellular metals are provided that engage at least partially in the depressions (60, 62), and that preferably allow a flow therethrough in logitudinal direction of the recuperator, **characterized in that** the inserts (64) are composed of a heat-resistant alloy which contains aluminium and is temperature-stable at least up to 1000°C, and wherein the heat-resistant alloy is an FeCrAl alloy or a CrNi-Al alloy.

2. Recuperator according to Claim 1, **characterized in that** the elevations (32, 58) are designed as ribs, which are separated from one another by the depressions (60, 62) in the form of interspaces, wherein the inserts (64) are preferably held in the depressions (60, 62) by undercuts (68).

3. Recuperator according to any of the preceding claims, **characterized in that** the inserts (64) are press-fitted in the depressions (60, 62).

4. Recuperator according to any of the preceding claims, **characterized in that** at the outside inserts (64) received within depressions (60, 62) are held by a continuous layer from the outside.

5. Recuperator according to any of the preceding claims, **characterized in that** the depressions (60, 62) are roughened on the surface thereof.

6. Recuperator according to any of claims 1 to 5, **characterized in that** the inserts (64) composed of the cellular metals are held in the depressions (60, 62) by material bonding, preferably by means of adhesive bonding, galvanizing, brazing, welding or sintering.

7. Recuperator according to any of the preceding claims, **characterized in that** the inserts (64) are held in the depressions (60, 62) by a tube (48) from the inside or from the outside.

8. Recuperator according to any of the preceding claims, **characterized in that** the inserts (64) are in the form of open-pored metal foam.

9. Recuperator according to any of the preceding claims, **characterized in that** the inserts (64) in the longitudinal direction extend only over a partial area of the recuperator (30b).

10. Recuperator burner having a burner head (12), on which a combustion tube (14) and an exhaust-guiding tube (48) are held, wherein a recuperator (30, 30a, 30b, 30c) according to one of the preceding claims is held between the combustion tube (14) and the exhaust-guiding tube (48), wherein preferably between the recuperator (30, 30a, 30b, 30c) and between the combustion tube (14) and the recuperator (30, 30a, 30b, 30c) in each case there is formed a gap (49, 50), which is at least partially filled with the inserts (64).

11. Recuperator burner having a burner head (12), on which a combustion tube (14) and an exhaust-guiding tube (48) are held, including a recuperator (30, 30a, 30b), in particular according to one of claims 1 to 9, and having a stub (70) for laterally carrying the exhaust gas out of the burner head (12) and feeding inlet air into the burner head (12), **characterized in that** there is provided on the stub (70) a further recuperator (30c) according to one of Claims 1 to 9.

12. Recuperator burner according to claim 10 or 11, **characterized in that** the burner head (12) is designed as an air part through which exhaust gas flows, which has an exhaust duct (18) and an inlet air duct (22), which are arranged coaxially with one another, wherein the inlet air duct (22) has a first inlet air duct section (24), which at least partially surrounds the exhaust duct (18) coaxially from the outside, and the exhaust duct (18) partially surrounds a second inlet air duct section (26) coaxially from the outside.

13. Recuperator burner according to claim 12, **characterized in that** the first inlet air duct section (24) is connected to the second inlet air duct section (26) by a connecting section (34), wherein preferably the recuperator (30, 30a, 30b) is fitted to the exhaust duct (18) in such a way as to allow the exhaust gas to flow axially from the outside (54) of the recuperator (30, 30a, 30b) into the exhaust duct (18).

## Revendications

1. Récupérateur pour un brûleur à récupérateur (10) destiné à préchauffer de l'air de combustion au moyen de la chaleur des gaz de fumée, le récupérateur (30, 30a, 30b, 30c) étant de configuration tubulaire avec un côté intérieur (56) et un côté extérieur (54), le récupérateur (30) se composant de métal, notamment d'acier, ou de céramique, une pluralité d'élévations (32, 58) et de creux (60, 62) se trouvant respectivement au moins au niveau du côté intérieur (56) ou du côté extérieur (54) du récupérateur (30, 30a, 30b, 30c), et des inserts (64) en un métal cellulaire étant accueillis au moins sur le côté intérieur (56) ou sur le côté extérieur (54), lesquels viennent au moins partiellement en prise dans les creux (60, 62) et à travers lesquels peut passer un écoulement de préférence dans la direction longitudinale du récupérateur, **caractérisé en ce que** les inserts (64) se composent d'un alliage résistant à la chaleur, lequel contient de l'aluminium et résiste aux températures au moins jusqu'à 1000 °C, l'alliage résistant à la chaleur étant un alliage de FeCrAl ou un alliage de CrNi-Al.

2. Récupérateur selon la revendication 1, **caractérisé en ce que** les élévations (32, 58) sont réalisées sous la forme de nervures qui sont séparées les unes des autres par les creux (60, 62) sous la forme d'espaces intermédiaires, les inserts (64) étant de préférence maintenus dans les creux (60, 62) par des contredépouilles (68).

3. Récupérateur selon l'une des revendications précédentes, **caractérisé en ce que** les inserts (64) sont enfoncés dans les creux (60, 62).

4. Récupérateur selon l'une des revendications précédentes, avec lequel les inserts (64) insérés dans les creux (60, 62) au niveau du côté extérieur sont maintenus depuis l'extérieur par une couche continue.

5. Récupérateur selon l'une des revendications 1 à 4, **caractérisé en ce que** les creux (60, 62) sont rendus rugueux au niveau de leur surface.

6. Récupérateur selon l'une des revendications 1 à 5, **caractérisé en ce que** inserts (64) en les métaux cellulaires sont maintenus dans les creux (60, 62) par fusion de matières, de préférence au moyen du collage, de la galvanisation, du brasage, du soudage ou du frittage.

7. Récupérateur selon l'une des revendications précédentes, **caractérisé en ce que** les inserts (64) sont maintenus par un tube (48) depuis l'extérieur ou l'intérieur.

8. Récupérateur selon l'une des revendications précédentes, **caractérisé en ce que** les inserts (64) sont réalisés sous la forme d'une mousse métallique à ports ouverts.

9. Récupérateur selon l'une des revendications précédentes, **caractérisé en ce que** les inserts (64) ne s'étendent dans la direction longitudinale que sur une zone partielle du récupérateur (30b).

10. Brûleur à récupérateur comprenant une tête de brûleur (12), à laquelle sont maintenus un tube de brûleur (14) et un tube d'échappement de gaz de fumée (48), un récupérateur (30, 30a, 30b, 30c) selon l'une des revendications précédentes étant maintenu entre le tube de brûleur (14) et le tube d'échappement de gaz de fumée (48), un intervalle (49, 50), qui est au moins partiellement rempli avec des inserts (64), étant respectivement formé de préférence entre le récupérateur (30, 30a, 30b, 30c) et le tube d'échappement de gaz de fumée (48) et entre le tube de brûleur (14) et le récupérateur (30, 30a, 30b, 30c).

11. Brûleur à récupérateur comprenant une tête de brûleur (12), à laquelle sont maintenus un tube de brûleur (14) et un tube d'échappement de gaz de fumée (48), comprenant un récupérateur (30, 30a, 30b), notamment selon l'une des revendications 1 à 9, et comprenant une tubulure (70) servant à l'évacuation latérale des gaz de fumée hors de la tête de brûleur (12) et à l'acheminement d'air frais dans la tête de brûleur (12), **caractérisé en ce qu'**un récupérateur (30c) supplémentaire selon l'une des revendications 1 à 9 se trouve au niveau de la tubulure (70).

12. Brûleur à récupérateur selon la revendication 10 ou 11, **caractérisé en ce que** la tête de brûleur (12) est réalisée sous la forme d'une partie aérienne traversée par un courant de gaz de fumée, laquelle possède un canal à gaz de fumée (18) et un canal à air frais (22) qui sont disposés de manière coaxiale l'un par rapport à l'autre, le canal à air frais (22) possédant une première portion de canal à air frais (24), qui entoure au moins partiellement de manière coaxiale depuis l'extérieur le canal à gaz de fumée (18), et le canal à gaz de fumée (18) entourant au moins partiellement de manière coaxiale depuis l'extérieur une deuxième portion de canal à air frais (26).

13. Brûleur à récupérateur selon la revendication 12, **caractérisé en ce que** la première portion de canal à air frais (24) est reliée à la deuxième portion de canal à air frais (26) par le biais d'une portion de liaison (34), le récupérateur (30, 30a, 30b) étant de préférence attaché au canal à gaz de fumée (30) de telle sorte qu'une décharge axiale des gaz de fumée dans le canal à gaz de fumée (18) depuis le côté extérieur (54) du récupérateur (30, 30a, 30b) est rendue possible.
